# EUROPÄISCHE PATENTANMELDUNG

(11) **EP 2 025 957 A1**
(43) Veröffentlichungstag der Anmeldung: **18.02.2009**
(21) Anmeldenummer: 08104903.3
(22) Anmeldetag: 28.07.2008
(51) Int. Cl.: F16C 23/04, H02K 5/167

(54) **Elektrische Antriebseinheit mit Entlüftungsnuten aufweisendem Kalottenlager**

(30) Priorität: 14.08.2007 DE 102007038330
(71) Anmelder: Continental Automotive GmbH, 30165 Hannover (DE)
(72) Erfinder: Hein, Christian, 97080, Würzburg (DE); Klingler, Peter, 97277, Neubrunn (DE); Lesch, Michael, 97232, Essfeld (DE); Schmadl, Charlotte, 97076, Würzburg (DE)

(57) **Zusammenfassung**

Die Erfindung betrifft eine elektrische Antriebseinheit (1), welche insbesondere für einen Fensterheberantrieb vorgesehen ist und welche ein Getriebe (2) und einen Elektromotor (6) enthält. Der Elektromotor (6) weist eine Rotorwelle (10) auf, deren einer Endbereich (10a) mittels eines Kalottenlagers (11) in einem Lagerdom (7a) des Gehäuses (7) des Elektromotors (6) gelagert ist. Das Kalottenlager (11) weist eine oder mehrere Entlüftungsnuten (11a) auf. Dadurch wird erreicht, dass beim Einsetzen der Rotorwelle (10) kein das Einsetzen der Rotorwelle in den Lagerdom (7a) erschwerender Druck aufgebaut wird.

## Beschreibung

Die Erfindung betrifft eine elektrische Antriebseinheit, welche ein Getriebe und einen Elektromotor enthält, wobei der Elektromotor eine Rotorwelle aufweist, deren einer Endbereich mittels eines Kalottenlagers in einem Lagerdom des Gehäuses des Elektromotors gelagert ist.

Derartige elektrische Antriebseinheiten sind bereits bekannt.

Die Aufgabe der Erfindung besteht darin, eine elektrische Antriebseinheit mit den im Oberbegriff des Anspruchs 1 angegebenen Merkmalen derart weiterzubilden, dass ihr Zusammenbau vereinfacht ist.

Diese Aufgabe wird durch eine elektrische Antriebseinheit mit den im Anspruch 1 angegebenen Gesamtmerkmalen gelöst. Vorteilhafte Ausgestaltungen der Erfindung sind in den abhängigen Ansprüchen angegeben.

Die Vorteile der Erfindung bestehen insbesondere darin, dass beim Einführen der Rotorwelle in die Kalotte, die im Lagerdom des Gehäuses des Elektromotors befestigt ist, kein Luftstau auftritt, wie es bei bekannten elektrischen Antriebseinheiten aufgrund des engen Lagerspaltes der Fall ist. Bei bekannten elektrischen Antriebseinheiten ist aufgrund des auftretenden Luftstaus Kraft, Geschicklichkeit und Zeitaufwand notwendig, um die Rotorwelle in die im Lagerdom des Gehäuses befestigte Kalotte einzusetzen und dort in einer gewünschten Endposition zu lagern. Ein derartiger Luftstau wird bei der erfindungsgemäßen elektrischen Antriebseinheit aufgrund der in das Kalottenlager eingebrachten Entlüftungsnuten in vorteilhafter Weise vermieden. Dies führt zu einer erheblichen Erleichterung des Zusammenbaus der elektrischen Antriebseinheit, da beim Einsetzen der Rotorwelle Luft durch die Entlüftungsnuten entweichen kann, so dass im Lagerdom des Motorgehäuses kein Luftstau entsteht.

Ein Einbringen von Entlüftungsnuten in das Kalottenlager ist in einfacher und kostengünstiger Weise möglich, so dass die Mehrkosten einer elektrischen Antriebseinheit gegenüber bekannten elektrischen Antriebseinheiten gering sind.

Weitere vorteilhafte Eigenschaften der Erfindung ergeben sich aus deren beispielhafter Erläuterung anhand der Figuren. Es zeigt
- Figur 1: eine Schnittdarstellung einer elektrischen Antriebseinheit,
- Figur 2: eine vergrößerte Darstellung eines Teils der in der Figur 1 gezeigten elektrischen Antriebseinheit,
- Figur 3: eine Skizze zur Erläuterung einer ersten Ausführungsform der Erfindung,
- Figur 4: eine Skizze zur Erläuterung einer zweiten Ausführungsform der Erfindung und
- Figur 5: eine Skizze zur Erläuterung einer dritten Ausführungsform der Erfindung

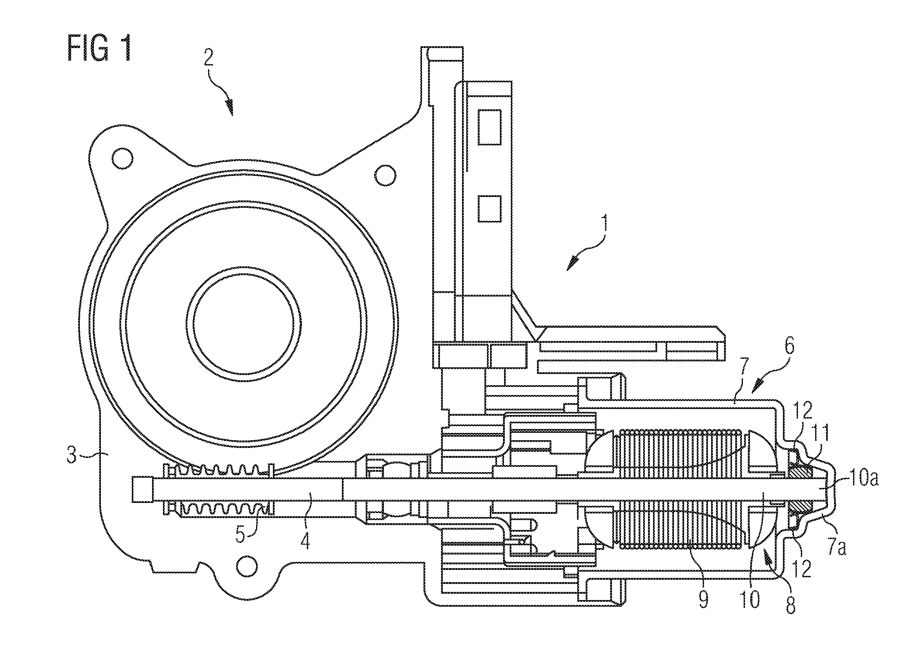

Die Figur 1 zeigt eine Schnittdarstellung einer elektrischen Antriebseinheit, die beispielsweise für den Fensterheberantrieb eines Kraftfahrzeugs vorgesehen ist.

Diese elektrische Antriebseinheit 1 weist ein Getriebe 2 und einen Elektromotor 6 auf. Zum Getriebe 2 gehören ein Getriebegehäuse 3 und eine Schneckenwelle 4, welche eine Verzahnung 5 enthält. Der Elektromotor 6 weist ein Motorgehäuse 7 auf, dessen einer axialer Endbereich von einem Lagerdom 7a gebildet wird. Innerhalb des Motorgehäuses 7 ist ein Rotor 8 gelagert, zu welchem eine Rotorwelle 10 und ein an der Rotorwelle befestigtes Rotorpaket 9 gehören. Die Rotorwelle 10 ist mittels ihres durch die Kalotte eines Kalottenlagers 11 geführten Endbereichs 10a in den Lagerdom 7a des Motorgehäuses 7 eingesetzt. Zur sicheren Halterung der Kalotte des Kalottenlagers 11 im Lagerdom 7a sind Klemmbrillen 12 vorgesehen.

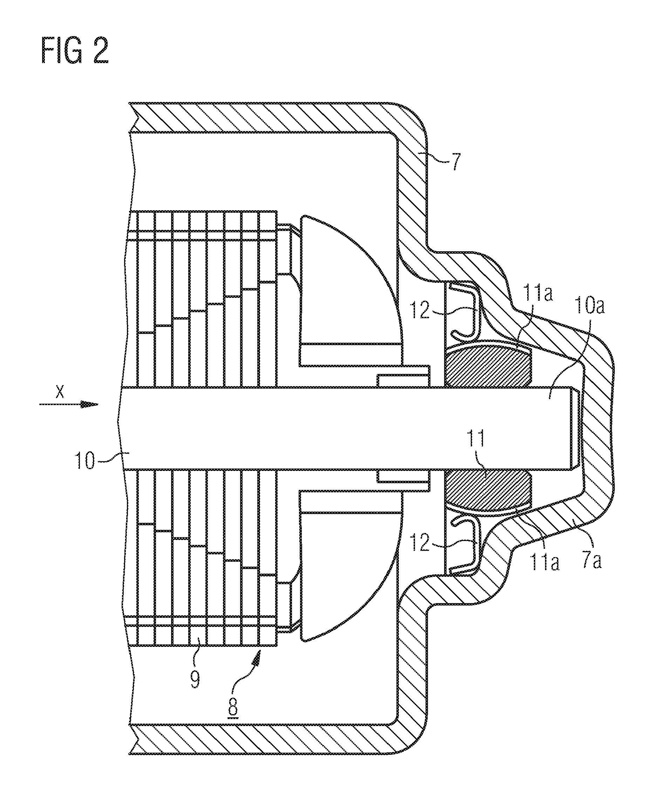

Die Figur 2 zeigt eine vergrößerte Darstellung eines Teils der in der Figur 1 gezeigten elektrischen Antriebseinheit. In dieser vergrößerten Darstellung sind ein Teil des Motorgehäuses 7, ein Teil des Rotorkörpers 9 und der Rotorwelle 10 des Rotors 8 sowie die Klemmbrillen 12, das Kalottenlager 11, der Endbereich 10a der Rotorwelle und der Lagerdom 7a gezeigt. Aus dieser vergrößerten Darstellung ist ersichtlich, dass die Kalotte mit in Axialrichtung verlaufenden Entlüftungsnuten 11a versehen ist.

Diese Entlüftungsnuten 11a haben den Vorteil, dass beim Einsetzen der Rotorwelle in Richtung des Pfeiles x durch die Kalotte 11 in den Lagerdom 7a Luft in Gegenrichtung des Pfeiles x entweichen kann, so dass im Lagerdom 7a kein Luftstau entsteht. Dies vereinfacht das Einsetzen der Rotorwelle in den Lagerdom, da wegen des nicht stattfindenden Druckaufbaus im Lagerdom die Rotorwelle nach dem Loslassen in ihrer Endposition im Lagerdom verbleibt und nicht aus dieser Endposition in Gegenrichtung des Pfeiles x herausgedrückt bzw. herausgeschleudert wird.

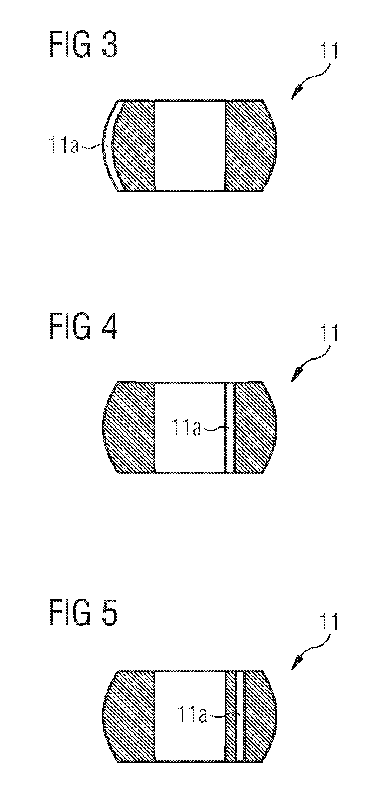

Die Figur 3 zeigt eine Skizze zur Erläuterung einer ersten Ausführungsform der Erfindung. Bei dieser ersten Ausführungsform ist eine Entlüftungsnut 11a vorgesehen, die am Außenmantel einer Kalotte des Kalottenlagers 11 in Axialrichtung verläuft.

Die Figur 4 zeigt eine Skizze zur Erläuterung einer zweiten Ausführungsform der Erfindung. Bei dieser zweiten Ausführungsform ist eine Entlüftungsnut 11a vorgesehen, die am Innenmantel einer Kalotte des Kalottenlagers 11 in Axialrichtung verläuft.

Die Figur 5 zeigt eine Skizze zur Erläuterung einer dritten Ausführungsform der Erfindung. Bei dieser dritten Ausführungsform ist eine Entlüftungsnut 11a vorgesehen, die als in Axialrichtung verlaufende Durchbohrung einer Kalotte des Kalottenlagers 11 realisiert ist.

Weitere Ausführungsbeispiele für die Erfindung bestehen darin, mehrere Entlüftungsnuten in das Kalottenlager einzubringen. Dies erleichtert ein Einsetzen der Rotorwelle in den Lagerdom des Motorgehäuses weiter, da ein besseres Entweichen der Luft aus dem Lagerdom in Gegenrichtung des Pfeiles x erfolgen kann.

## Patentansprüche

1. Elektrische Antriebseinheit (1), welche ein Getriebe (2) und einen Elektromotor (6) enthält, wobei der Elektromotor (6) eine Rotorwelle (10) aufweist, deren einer Endbereich (10a) mittels eines Kalottenlagers (11) in einem Lagerdom (7a) des Gehäuses (7) des Elektromotors (6) gelagert ist,
**dadurch gekennzeichnet,**
**dass** das Kalottenlager (11) eine oder mehrere Entlüftungsnuten (11a) aufweist.

2. Elektrische Antriebseinheit nach Anspruch 1,
**dadurch gekennzeichnet,**
**dass** die Entlüftungsnuten (11a) in Axialrichtung verlaufen.

3. Elektrische Antriebseinheit nach Anspruch 1 oder 2,
**dadurch gekennzeichnet,**
**dass** die Entlüftungsnuten (11a) am Außenmantel einer Kalotte vorgesehen sind.

4. Elektrische Antriebseinheit nach einem der vorhergehenden Ansprüche,
**dadurch gekennzeichnet,**
**dass** die Entlüftungsnuten (11a) am Innenmantel einer Kalotte vorgesehen sind.

5. Elektrische Antriebseinheit nach einem der vorhergehenden Ansprüche,
**dadurch gekennzeichnet,**
**dass** die Entlüftungsnuten (11a) in Axialrichtung verlaufende Durchbohrungen einer Kalotte sind.
